# EUROPÄISCHE PATENTANMELDUNG

(11) **EP 1 764 212 A1**
(43) Veröffentlichungstag der Anmeldung: **21.03.2007**
(21) Anmeldenummer: 06019129.3
(22) Anmeldetag: 13.09.2006
(51) Int. Cl.: B32B 27/08, C09J 123/08, C09J 7/02

(54) **Thermoplastischer Materialverbund, Verfahren zu seiner Herstellung sowie seine Verwendung**

(30) Priorität: 17.09.2005 DE 102005044450
(71) Anmelder: Epurex Films GmbH & Co. KG, 29656 Walsrode (DE)
(72) Erfinder: Schultze, Dirk, Dr., 29664 Walsrode (DE); Kosthorst, Helge, 29664 Walsrode (DE); Schrot, Frank, 29664 Walsrode (DE); Heins, Rüdiger, 21272 Egestorf (DE)
(74) Vertreter: Feldhues, Michael L.F.

(57) **Zusammenfassung**

Diese Erfindung betrifft mindestens zweischichtige flexible, elastische, thermoplastische Materialverbunde mit einer niedriger und einer höher erweichenden Schicht, wobei die höher erweichende Schicht im Wesentlichen aus thermoplastischen Polyesterblockcopolymeren besteht, welche oberhalb 150°C (auf der Koflerbank) und mindestens 15°C oberhalb der niedriger erweichenden Schicht erweichen, und wobei die niedrig erweichende Schicht aus mindestens einem warmklebrigen thermoplastischen Material aus der Gruppe umfassend Polyolefin-Methacrylsäure- und Polyolefin-Acrylsäure-Copolymere und Polyolefin-Methacrylsäureester- und Polyolefin-Acrylsäureester-Copolymere mit einer Erweichungstemperatur (auf der Koflerbank) von unter 135°C besteht und die Schichten bei thermoplastischer Verarbeitung direkt miteinander verbunden sind, ein Verfahren zur Herstellung der Materialverbunde sowie ihre Verwendung.

## Beschreibung

Diese Erfindung betrifft mindestens zweischichtige flexible, elastische, thermoplastische Materialverbunde mit einer niedriger und einer höher erweichenden Schicht, wobei die höher erweichende Schicht im Wesentlichen aus thermoplastischen Polyesterblockcopolymeren besteht, welche oberhalb 150°C (auf der Koflerbank) und mindestens 15°C oberhalb der niedriger erweichenden Schicht erweichen, und wobei die niedrig erweichende Schicht aus mindestens einem warmklebrigen thermoplastischen Material aus der Gruppe umfassend Polyolefin-Methacrylsäure- und Polyolefin-Acrylsäure-Copolymere und Polyolefin-Methacrylsäureester- und Polyolefin-Acrylsäureester-Copolymere mit einer Erweichungstemperatur (auf der Koflerbank) von unter 135°C besteht und die Schichten bei thermoplastischer Verarbeitung direkt miteinander verbunden sind, ein Verfahren zur Herstellung der Materialverbunde sowie ihre Verwendung.

Kunststoff-Folien sind in vielen Variationen bekannt. Eine spezielle Ausführungsform sind die Schmelzklebefolien. Schmelzklebefolien, ihre Eigenschaften und Vorteile sowie Verfahren zu ihrer Herstellung aus den gängigen Haftschmelzklebstoffgranulaten oder Pulvern sind beispielsweise in US 4,379,117 oder DE 2 114 065 beschrieben. Der Einsatz von Schmelzklebefolien ist exemplarisch in DE 3 911 613 dargestellt. Eine generelle Kategorisierung von Klebstoffen lässt sich beispielsweise bei Habenicht: Kleben, Springer Verlag, Berlin 1986, nachlesen. Schmelzklebefolien sind in Ausführungsformen als beidseitig klebefähige Folien aber auch als nur einseitig klebefähige Dublofolien bekannt.

Ein- und mehrschichtige Polyesterblockcopolymer- oder Copolyester-Elastomer-Folien sind beispielsweise in US 3,023,192, US 3,651,014, US 3,775,374 und in EP 0 591 782 beschrieben. Die elastischen Polyester-Copolymere sind im allgemeinen Blockcopolymere, deren makroskopische Eigenschaftsbilder sich als Kombination der Eigenschaften der einzelnen blockbildenden Komponenten ergeben. Sie werden üblicherweise in die Stoffklasse der thermoplastischen Elastomere eingeordnet. Eine breite Übersicht über diese Stoffklasse vermittelt Legge in Rubber Chemistry and Technology 62 (1989) 529-547. Nach ISO 18064 wird diese Stoffklasse als thermoplastisches Copolyesterelastomer, kurz TPC, bezeichnet.

Copolyester-Elastomere sind Copolymere, die aus verschiedenen Segmenten aufgebaut sind. In dieser Gruppe werden die mechanischen Festigkeiten und hohen chemischen Beständigkeiten von hochschmelzenden Polyestern mit dem flexiblen Charakter niedrig schmelzender Polyester oder Polyether verknüpft. Obwohl es für beide Segmenttypen eine nahezu unendliche Vielfalt möglicher unterschiedlicher molekularer Bausteine gibt, werden doch bestimmte Typen bevorzugt eingesetzt. Bei den hochschmelzenden Polyester-Hartsegmenten handelt es sich um die Ester der Terephthalsäure, im Allgemeinen Ethylen- oder Butylen-Terephthalate. Bei den flexibleren Weichsegmenten sind Alkohol-terminierte Adipat-Ester oder die auf Ethylen- und Propylenoxid, aber auch Tetrahydrofuran basierenden Glycole bevorzugte Bausteine.

Als nach dem Stand der Technik bekannte Dublofolien werden Folien bezeichnet, die aus mindestens einer warmklebrigen, niedrig erweichenden Schicht eines Polymerharzes und wenigstens einer höher erweichenden Schicht eines zweiten Polymerharzes bestehen. Folienaufbauten, die aus mindestens einer niedrig erweichenden und einer höher erweichenden Schicht bestehen, sind aus dem Bereich der Verpackung insbesondere der Lebensmittelverpackung, bekannt. Die dort eingesetzten Folien sind meist aus Polyolefinen, die nur eine geringe Warmklebrigkeit besitzen, hergestellt. Im Unterschied zum Einsatz von Dublofolien, bei dem eine Verbindung einer einseitig klebenden Folie mit einem i.a. nicht klebenden Substrat erfolgt, werden bei der Verwendung siegelfähiger Verpackungen zwei Siegelschichten miteinander verschweißt.

Dublofolien unterscheiden sich damit von Haftklebefilmen, aufgebaut aus einer Trägerschicht, die mit reinem Haftklebstoff beschichtet ist, wie sie bespielsweise in der WO 92/22619 beschrieben sind, bieten eine zu geringe Klebkraft nicht nur bei erhöhten Temperaturen und können zudem zu leicht von dem Substrat abgelöst werden.

Bekannte Anwendungsgebiete für Dublofolien sind die Verhautung von porösen Gebilden wie beispielsweise Schaumstoffen, Webwaren und Vliesen. Diese Verhautung dient i.a. der Herstellung einer glatten Oberfläche und damit dem Schutz gegen das Eindringen oder Durchtreten von Fluiden, meistens dem Schutz vor Wasser. So lassen sich Schaumsysteme durch Verhautung u.a. vor Verrottung schützen. Ferner können so verhautete Gebilde einfach bedruckt oder lackiert werden, was bei porösen Oberflächen nur schwer möglich ist.

Für technische Anwendungen sind die Eigenschaften der weit verbreiteten und preiswerten, nicht modifizierten Polyolefine oft nicht ausreichend, so dass auf Dublofolien aus technischen Thermoplasten wie Polyamiden, Polyestern oder auch Kombinationen aus ihnen zurückgegriffen werden muss. Dies ist insbesondere dann der Fall, wenn Substrate mit polaren Oberflächen abgedeckt werden sollen oder wenn neben den adhäsiven Klebstoffeigenschaften auch die kohäsiven Werkstoffcharakteristika des Klebers von entscheidender Bedeutung sind. Sollen die Dublofolien zudem noch elastische Eigenschaften besitzen, wird für die im höheren Temperaturbereich erweichende Schicht gerne auf Polymerharze aus der Gruppe der thermoplastischen Polyelastomere (TPE) zurückgegriffen.

Für die bekannten elastischen Dublofolien aus thermoplastischen Materialien werden als höher erweichende Schicht gerne TPC eingesetzt, die ein breites Spektrum relevanter Eigenschaften, wie eine hohe Abriebfestigkeit und hohe Reißfestigkeit bei zugleich hoher Reißdehnung und gutem Rückstellvermögen bieten. Als höher erweichende Schicht von Dublofolien eignen sich prinzipiell die am Markt erhältlichen TPC, insbesondere die TPC, die bereits heute für einschichtige Folien eingesetzt werden bzw. die auf ihnen basierenden Rohstoffrezepturen.

Einschichtige Folien aus höher erweichenden TPE, Verfahren zu ihrer Herstellung sowie ihre Verwendung sind beispielsweise aus EP 675167 oder EP 591782 bekannt. Die Folien weisen den Nachteil auf, dass sie aufgrund rascher Kristallisation nur geringe Aufweitungsverhältnisse im Blasfolienprozess zulassen. Die in diesen Schriften beschriebenen Aufbauten lassen sich als höherschmelzende Schicht bzw. Schichten in Dublofolien integrieren oder sind bereits in die nach ihrer Art bekannten Dublofolien integriert worden.

Mischungen aus Polyetherblockamiden mit Polyethylenoxid Weichsegmenten und Ethylen-Copolymerisaten sowie Maleinsäure-Anhydrid-gepropften olefinischen Copolymerisaten, deren Comonomere aus Alkyl(meth)acrylaten gebildet werden, sind aus EP 0 688 826 bekannt. Die dort beschriebenen Mischungen bedürfen des Maleinsäureanhydrids zur Fixierung der Mischung. Ebenso weisen sie keine ausreichende Warmklebrigkeit auf.

Dublofolien für technische Anwendungen weisen bevorzugt eine einseitig höhere Warmklebrigkeit auf. Ihre Verbundhaftung ist zudem meist auf das Substrat, gegen das sie geklebt werden sollen, speziell zugeschnitten. Die Materialauswahl für die Schmelzklebeschicht der Dublofolie wird vielfach aus der gleichen Materialklasse wie das Substrat angestrebt. Für technische Anwendungen wird für die Auswahl der Rohstoffe für die Schmelzklebeschicht deshalb bevorzugt auf die Rohstoffgruppe umfassend die Klassen der thermoplastischen Polyamide, Polyester und Polyurethane zurückgegriffen. Bei diesen Hotmelt-Einstellungen handelt es sich üblicherweise nicht um Homopolymere sondern um Copolymere. Durch Copolymerisation lassen sich entscheidende Werkstoffeigenschaften wie Schmelzpunkt, Erweichungspunkt, Kristallisationsverhalten und E-Modul beeinflussen. Die bekannten Polyester-Copolymer Schmelzkleberohstoffe zeichnen sich vielfach durch steifere Charakteristika aus. Weniger kristalline Einstellungen besitzen eine für technische Prozesse i.a. nicht akzeptabel lange Abbindezeit. Deshalb werden für technische Dublofolien mit Barriereschicht aus TPC gerne Polyurethan-TPE, kurz TPU, in der warmklebrigen Schicht verwendet.

Vielfach besteht jedoch die Anforderung, die Schmelzklebe- oder Siegelrohmaterialien für die niedriger erweichende Schicht so auszuwählen, dass sie einen vergleichsweise niedrigen Erweichungsbereich von unter 135°C haben, damit sie bei der Verarbeitung das zu kaschierende oder zu verhautende Material nicht schädigen. Eine solche Anforderung ist beispielsweise für das Verhauten von Schaum- und Vlieskunststoffen gängig. Für diese Anwendung sind deshalb Schmelzklebstoffe mit Erweichungsbereichen (auf der Koflerbank) von unter 135°C notwendig.

Sollen Dublofolien mit einer Schicht aus niedrig erweichenden Polymerharzen hergestellt werden, so ist oftmals eine Trennschicht zur Führung auf den Walzen bei der Herstellung und/oder zur Verhinderung des Verblockens auf dem Wickel notwendig. Derartige dauerhaft klebende Materialien haben zur Folge, dass eine Bahn, die einseitig mit einer solchen Kleberschicht überzogen und zu einer Rolle bzw. einem Wickel oder einem Ballen aufgewickelt ist, sich nicht mehr von der Rolle abziehen lässt, weil die Vorderseite mit der Rückseite verklebt. Um die Verarbeitbarkeit einer solchen Rolle zu beeinträchtigen muss nicht unbedingt eine dauerfeste Verklebung erfolgen. Bereits geringfügige Erhöhungen der zum Abziehen notwendigen Kraft können bei elastischen Materialen wie den TPC dazu führen, dass sie so stark unter Bahnzug verformt werden, dass sie nicht mehr sicher verarbeitet werden können.

Ethylenacrylsäure-Copolymere, kurz EAA, sind für breite Haftneigung gegenüber Ethylenbasierten Polyolefinen, Polyamid-Materialien und artverwandten Stoffen bekannt. Ihre Haftkraft zu TPE wie TPU oder auch TPC wird allgemein als schlecht angesehen, wie beispielsweise in den Ausführungen zur Adhäsion von Kunststoffen zu der Primacor-Produktreihe der Fa. Dow dargestellt.

Werden TPC mit Copolyolefinen verbunden, so lassen sich diese Verbunde üblicherweise mechanisch trennen. Eine geringe Verbundhaftung ist beim erfindungsgemäßen Einsatz der Materialkombinationen von Nachteil, da die höher erweichende Schicht die zugedachte Schutzfunktion nicht wahrnehmen kann.

Ebenso bekannt ist das Aufprägen feiner Strukturen auf eine Folienseite, so dass die eine Schicht der Dublofolie systematisch geschwächt und ein fortlaufendes Trennen des Verbundes erschwert wird. Hierbei wird nach dem Stand der Technik aber in mindestens einer Schicht eine effektive Schichtdicke unterhalb 10 µm notwendig, um das kontinuierliche Trennen sicher zu verhindern.

Der vorliegenden Erfindung lag die Aufgabe zugrunde, eine zum Verhauten von porösen Materialien geeignete Dublofolie bereitzustellen, deren Deckschicht mit hoher Temperaturbeständigkeit oberhalb 150°C erweicht und mit einer unterhalb 135°C erweichenden Schicht in Coextrusion ohne zusätzliche Trennschicht auf der höherschmelzenden oder niedrigerschmelzenden Seite hergestellt und gelagert werden kann, ohne dabei auf dem Wickel zu verblocken und ihre Warmklebeeigenschaften zu verlieren.

Wünschenswert ist ebenso ein weich flexibler Charakter, der mit einem guten Auszugsverhalten in Folienherstellungs- oder Tiefziehprozessen einhergeht. Die Schmelzklebeschicht sollte eine möglichst universelle Klebneigung zu vielen Substraten besitzen. Wichtig ist für die höher erweichende Deckschicht zudem eine Formtreue bei höheren Temperaturen und eine langfristige thermooxidative Stabilität.

Eine weiche flexible Einstellung ist zudem beim Einsatz in Schall- und Schwingungs-dämpfenden Elementen von Vorteil.

Die erfindungsgemäße Folie soll sich zudem leichter als die nach dem Stand der Technik bekannten Dublofolien über die gebräuchlichen Maschinen führen lassen. Zudem soll sie sich bei den für die bekannten Dublofolien üblichen Bedingungen verarbeiten lassen. Hierzu zählen insbesondere die Verarbeitung auf Thermokaschierkalandern ebenso wie die Verarbeitung auf Flachbett-Thermokaschieranlagen und die Verbindung aktivierter Dublofolien mit Substraten in einem der Aktivierungsstation nachgeschalteten Presswerk.

Erfindungsgemäß gelang es, einen den genannten Anforderungen genügenden Materialverbund (Verbundfolie) bereitzustellen, der dadurch gekennzeichnet ist, dass der Verbund aus mindestens einer höherschmelzenden Schicht aus TPC und einer niedriger erweichenden Schicht aus einem unter 135°C (auf der Koflerbank) erweichenden Hotmelt-Material aus den Substanzklassen der warmklebrigen thermoplastischen Materialien aus der Gruppe umfassend Polyolefin-Methacrylsäure- und Polyolefin-Acrylsäure-Copolymere sowie Polyolefin-Methacrylsäureester- und Polyolefin-Acrylsäureester-Copolymere mit einer Erweichungstemperatur (auf der Koflerbank) von unter 135°C besteht.

Beide Schichten lassen sich bei thermoplastischer Verarbeitung ohne Einarbeitung einer weiteren Schicht einer haftvermittelnden Komponente mit hoher Verbundhaftung zusammenfügen. Die verbundenen Schichten können gegebenenfalls Minoritätskomponenten enthalten, die die Gebrauchseigenschaften modifizieren können. Die Minoritätskomponenten kommen erfindungsgemäß aus Klassen der Polymerharz-basierenden Additivkonzentrate enthaltend Wirkstoffkomponenten umfassend
a) anorganische Partikel und
b) organische Partikel.

Die höherschmelzende Schicht aus TPC entspricht hinsichtlich ihrer Rezepturbestandteile den nach dem Stand der Technik bekannten Folien aus TPC und erweicht oberhalb 150°C.

Für die höher schmelzende bzw. höher erweichende Schicht aus TPC kommen erfindungsgemäß die Materialien zum Einsatz, die heute als Rohstoffe für die nach dem Stand der Technik bekannten einschichtigen TPC-Folien, wie sie beispielsweise unter den Handelsnamen Dureflex oder Platilon am Markt erhältlich sind, verwendet werden, wobei ihr Erweichungsbereich (auf der Koflerbank) über 150°C und mindestens 15°C über dem der niedriger erweichenden Schicht liegt. Geeignete TPC werden beispielsweise unter den Handelsnamen Arnitel, Riteflex, Hytrel, Elastotec, Placcel oder Kopel angeboten.

Bevorzugt sind TPC, deren Erweichungsbereich (auf der Koflerbank) zwischen 160°C und 215°C, besonders bevorzugt zwischen 160°C und 190°C liegt.

Die Viskosität der als Matrixmaterialien der höher erweichenden Schicht geeigneten Substanzen wird vorzugsweise durch den Schmelzflussindex (MFR) beschrieben. Die Schmelzflussindices für die Matrixkomponente der höher erweichenden Schicht des erfindungsgemäßen Materialverbundes liegen bevorzugt zwischen 0,5 g/10 min (gemessen nach DIN 53 735 bei 230°C und einer Prüfmasse von 2,16 kg) und 30 g/10 min (gemessen nach DIN 53 735 bei 200°C und einer Prüfmasse von 2,16 kg), besonders bevorzugt zwischen 5 g/10 min (gemessen nach DIN 53 735 bei 230°C und einer Prüfmasse von 2,16 kg) und 20 g/10 min (gemessen nach DIN 53 735 bei 200°C und einer Prüfmasse von 2,16 kg).

Erfindungsgemäß bevorzugt sind die jeweils leichter verformbaren TPC Einstellungen, charakterisiert durch den geringeren Elastizitätsmodul bzw. die Shore-Härte. Bevorzugt sind TPC-Harze mit einer Shore D Härte (gemessen nach DIN 53505) von kleiner 60.

Bevorzugt sind TPC, deren Polyester-Hartsegment vorrangig aus Terephthalsäure und Butandiol-Einheiten gebildet wird.

Die als Matrixkomponente der höher erweichenden Schicht eingesetzten TPC zeigen eine Erweichungstemperatur, die mindestens 15°C oberhalb der niedrigerschmelzenden Copolyolefin Hotmelt-Komponente aus der Gruppe umfassend Polyolefin-Methacrylsäure- und Polyolefin-Acrylsäure-Copolymere sowie Polyolefin-Methacrylsäureester- und Polyolefin-Acrylsäureester-Copolymere liegt. Die niedrigerschmelzenden Copolyolefin Hotmelt-Komponenten ihrerseits haben einen Erweichungsbereich auf der Koflerbank von unter 135°C.

In einer besonders bevorzugten Ausführungsform lässt sich der erfindungsgemäße Materialverbund in flacher Darstellung zu einer Folie ausformen.

In einer bevorzugten Ausführungsform besteht diese Folie aus mindestens zwei Schichten, wobei sowohl die Folie aus höher erweichendem TPC als auch die Hotmelt-Folie aus Copolyolefin gegebenenfalls jeweils aus mehreren Einzelschichten ausgeführt sein können.

In einer bevorzugten Ausführungsform besteht die niedrig erweichende Schicht aus Copolyolefinen aus Copolymeren des Ethylen, deren Anteil an Comonomeren zwischen 5 Gew.-% und 30 Gew.-% an der Gesamtmasse des als Matrixharz der niedrig erweichenden Schicht eingesetzten Copolymere beträgt.

Als Ausgangsmaterialien für die Matrixkomponente der niedriger schmelzenden bzw. niedriger erweichenden Schicht sind die entsprechenden gängigen thermoplastischen Haftschmelzklebstoffe der am Markt bekannten Anbieter geeignet. Haftschmelzklebstoffe aus den erfindungsgemäß geeigneten Substanzklassen werden beispielsweise unter den Handelsnamen Nucrel, Lotryl, Lotader, Primacor, Elvalloy oder Escor angeboten. Die Schmelzkleberohstoffe aus der Substanzklasse der EAA werden in steiferen und leichter verformbaren Einstellungen angeboten. Erfindungsgemäß bevorzugt sind die jeweils leichter verformbaren Einstellungen, die durch den geringeren Elastizitätsmodul charakterisiert sind. Bevorzugt sind Copolyolefin-Harze mit einer Shore D Härte (gemessen nach DIN 53505) kleiner 40.

Für eine besonders bevorzugte Ausführungsform werden als Comonomere des olefinischen Matrixharzes der niedriger erweichenden Schicht Acrylsäure, ihre Ester oder ihre Salze eingesetzt, wobei der Anteil der Comonomere an der Gesamtmasse des als Matrixharz der niedrig erweichenden Schicht eingesetzten Copolymere zwischen 20 Gew.-% und 30 Gew.-% liegt.

Bevorzugt liegt der Erweichungsbereich der in der niedriger erweichenden Folienschicht eingesetzten Materialien zwischen 80°C und 110°C, besonders bevorzugt zwischen 85°C und 95°C.

In einer besonders bevorzugten Ausführungsform werden für die Matrixkomponente der niedriger erweichenden Schicht Ethylen-Butylacrylat oder Ethylen-Methylacrylat Copolymere eingesetzt.

Die Viskosität der als Matrixmaterialien der niedriger erweichenden Seite geeigneten Substanzen wird vorzugsweise durch den Schmelzflussindex (MFR) beschrieben. Die Schmelzflussindices für die Matrixkomponente der niedriger erweichenden Schicht des erfindungsgemäßen Materialverbundes liegen bevorzugterweise zwischen 0,5 g/10 min und 10 g/10 min (gemessen nach DIN 53 735 bei 190°C und einer Prüfmasse von 2,16 kg).

Eine bevorzugte Ausführung der erfindungsgemäßen Matrialverbunde sind Folien mit einer Gesamtdicke zwischen 20 µm und 200 µm. Die Dicke der höherschmelzenden Seite wird so gewählt, dass sie bei Wärmeeintrag unter Verarbeitungsbedingungen nicht wesentlich erweichen wird. Ihre Dicke liegt vorzugsweise zwischen 10 µm und 150 µm. Die Dicke der niedriger erweichenden Seite wird in Abhängigkeit des zu bedeckenden Substates so gewählt, dass eine optimale Verklebung erreicht wird. Für stark poröse Substrate wird i.a. eine größere niedrig erweichende Schichtendicke gewählt, damit auch bei ungleichmäßiger Oberfläche des Substrates und dadurch bedingtem teilweisen Wegfließen der Schmelzklebstoffschicht eine möglichst große Verklebungsfläche geschaffen wird. Bei glatten Substraten genügt dagegen eine geringere Schmelzklebedicke. Deshalb ist für die niedriger erweichende Schicht ein Dickenbereich zwischen 10 µm und 150 µm vorzugsweise geeignet.

Zur Herstellung des erfindungsgemäßen Materialverbundes eignen sich besonders die gängigen thermischen Umformverfahren zur Verarbeitung von Kunststoffen zu mehrschichtigen Flächengebilden. Hier wären die Herstellung durch Coextrusion zu nennen, die nach dem Flachfolienverfahren z.B. mit Gießwalze oder Abzugskalander oder nach dem Blasfolienverfahren erfolgen kann. Ebenso geeignet zur Herstellung der erfindungsgemäßen Dublofolien ist die Beschichtung einer einlagig hergestellten Folie mit einer zweiten Schicht. Auch das Transferbeschichtungsverfahren, bei dem die Schmelzefahne einer Schicht zunächst auf einen Träger gebracht wird und anschließend die Anbindung an die einzeln hergestellte Folie oder ebenfalls auf einen Träger gebrachte zweite Schmelzefahne in einem Kalander oder sonstigen Preßwerkzeug erfolgt. Die Dublierung zweier einschichtiger, möglicherweise mit einem Träger hergestellter Folien ist ebenfalls geeignet. Aufgrund der besseren erzielbaren Verbundhaftung ist die Coextrusion unter den genannten Herstellungsverfahren besonders bevorzugt.

Erfindungsgemäß besonders bevorzugt ist die Herstellung im Blasfolienprozess, da bei diesem Prozess nur geringe Spannungen im Verbund verbleiben und somit wenig Relaxationen bei Wiederaktivierung erfolgen. Eine weitere Reduzierung der Relaxationsneigung ist durch Coextrusion mit einem Trägermaterial möglich.

Der erfindungsgemäße Materialverbund eignet sich zum Abdichten poröser Werkstoffe ebenso wie zur Ausstattung von Gegenständen mit einer Oberfläche aus TPC. Hierbei wird durch die außerordentlichen Eigenschaften der eingesetzten TPC eine Aufwertung hinsichtlich der Oberflächengüte in Bezug auf die Abrieb- und Kratzbeständigkeit erreicht.

In einer bevorzugten Anwendung wird die erfindungsgemäße Verbundfolie gegen poröse Substrate geklebt. Hierzu wird derart verfahren, dass zur Kaschierung oder Abdichtung von porösen Substraten, insbesondere Schaumkunststoffen, textilen Materialien, Nähten, Vliesstoffen, Leder und/oder Spaltleder mit der erfindungsgemäßen Dublofolie die niedriger erweichende Schicht der Folie auf oder über ihren Erweichungsbereich erwärmt und mit dem Substrat in Verbindung gebracht und ggf. unter Anwendung zusätzlichen Druckes verklebt wird, wobei die erweichte Schicht mit dem niedrigeren Erweichungsbereich dem Substrat zugewandt ist.

Der Wärmeeintrag in die Schicht mit niedrigerem Erweichungsbereich kann beispielsweise durch Warmluft, Thermostrahler und/oder beheizte Walzen erfolgen. Dies kann direkt in die niedriger erweichende Schicht oder durch die höher erweichende Schicht hindurch erfolgen. Erfindungsgemäß bevorzugt ist der Wärmeeintrag direkt in die niedriger erweichende Schicht. Vor der Applikation des erfindungsgemäßen Materialverbundes kann dieser einer thermischen Voraktivierung unterzogen werden.

Die Abdichtung mit den erfindungsgemäßen Materialverbunden kann durch Thermokaschierung erfolgen, wobei der Verbund ohne zusätzliche Trennschichten gehandhabt werden kann. Die Thermokaschierung wird durch den Wegfall der Trennschicht ökonomisch gegenüber Dublofolien mit Trennschicht begünstigt. Wird seitens des Anwenders jedoch eine steifere Trägerschicht zur besseren Handhabung gewünscht, so lässt sich auch der erfindungsgemäße Materialverbund auf der höher erweichenden Schicht mit einer zusätzlichen Trägerschicht aus Polyethylen versehen, die nicht haftfest mit der Schicht aus TPC verbunden ist.

Die Thermokaschierung mit den erfindungsgemässen Materialverbunden bietet zudem eine durch eine andere Technologie und den mehrschichtigen Aufbau bedingte erhöhte Verarbeitungssicherheit gegenüber der Bildung von Löchern oder Pinholes, die bei der Flammkaschierung durch Durchbrenner hervorgerufen werden, so dass verminderte Schichtdicken realisierbar werden. Letztere stellen einen weiteren ökonomischen und ökologischen Vorteil der erfindungsgemäßen Dublofolie dar.

Eine ebenso bevorzugte Verwendung ist der Einsatz zur Nahtabdichtung vernähter, abgesehen von den Nähten in der Fläche bereits abgedichteter Gebilde, insbesondere von Folien-kaschierten Textilien, Textil/Vlies- und/oder Textil/Schaum-Verbunden. Die genannten Folien-kaschierten Aufbauten können sowohl durch Flamm- oder Thermokaschierung hergestellt worden sein. Durch Vernähung verknüpfte Aufbauten können durch den Einsatz erfindungsgemäßer Materialverbunde gegen den Durchtritt von Fluiden im Bereich der Nähte geschützt werden. Zur Abdichtung von Nähten werden bevorzugt schmale Streifen der erfindungsgemäßen Dublofolien, sogenannte Tapes, eingesetzt. Die Breite von Tapes liegt bevorzugterweise zwischen 20 mm und 50 mm.

Die Nähte der o.g. Aufbauten können, in Abhängigkeit von der Gestaltung der Naht, von den erfindungsgemäßen Materialverbunden umschlossen oder lediglich abgedeckt werden. Bei der Nahtabdichtung erfolgt die Verklebung der niedriger schmelzenden Seite in Form der erfindungsgemäß bevorzugten Dublofolie üblicherweise auf die Folien-kaschierte Seite der o.g. Aufbauten.

Im Bereich der Nahtüberkreuzungen erfolgt die Abdichtung derart, dass ein Tape über ein zuvor gesiegeltes Tape gesiegelt wird. Hierbei muss die niedriger erweichende Schicht nach Aktivierung gegen die höher erweichende Schicht eines üblicherweise baugleichen Tapes siegeln.

Die erfindungsgemäßen Folienverbunde können mit den bekannten physikalischen und chemischen Behandlungsmethoden wie beispielsweise der Corona-Behandlung ein- oder beidseitig in ihren Oberflächeneigenschaften modifiziert werden.

Die Erfindung soll anhand der nachfolgenden Beispiele näher erläutert werden.

Die im Rahmen der nachfolgenden Beispiele und Vergleichsbeispiele beschriebenen Materialverbunde wurden durch Blasfoliencoextrusion hergestellt. Die zum Aufschluss thermoplastischer Harze geeigneten Schneckenwerkzeuge sind in ihrem Aufbau z.B. von Wortberg, Mahlke und Effen in: Kunststoffe, 84 (1994) 1131-1138, von Pearson in: Mechanics of Polymer Processing, Elsevier Publishers, New York, 1985 oder der Fa. Davis-Standard in: Paper, Film & Foil Converter 64 (1990) S. 84 - 90 beschrieben. Werkzeuge zum Ausformen der Schmelze zu Folien sind u.a. von Michaeli in: Extrusions-Werkzeuge, Hanser Verlag, München 1991 erläutert.

### Beispiel A

Mit Hilfe eines Zweischicht-Blasfolienwerkzeuges wurde eine Folie hergestellt, deren höherschmelzende Schicht aus einem handelsüblichen TPC der Shore-D-Härte 55 gebildet wurde. Das Hartsegment dieses Copolyesters wurde aus 1,4 Butandiol und Dimethylterephthalat umgeestert, das Weichsegment bestand aus Polytetramethylen-Glykol. Der MFI betrug 15 g/10 min bei 230°C und einer Prüfbelastung von 2,16 kg. Die Dichte lag bei 1,20 g/cm³.

Dieser 25 µm dicken Schicht wurde 5% schwarzes Ruß-Masterbatch zugesetzt. Sämtliche für diese Schicht eingesetzten Komponenten wurden gemeinsam in einem Extruder aufgeschmolzen.

Die niedriger erweichende Schicht wurde aus einem Ethylen-Methylacrylat-Copolymer-Hotmelt-Material gebildet, dessen Methylacrylat-Anteil bei 25 Gew.-% lag und das einen MFI von 0,4 g/10 min bei 190°C und 2,16 kg bei einer Dichte von 0,944 g/cm³ aufwies. Die für die Ausbildung dieser 25 µm dicken, niedriger erweichenden Schicht eingesetzten Komponenten wurden mit einem weiteren Extruder plastifiziert.

Die beiden Schmelzeströme wurden in einem Zweischicht-Blasfolienkopf übereinandergelegt und aus diesem ausgetragen. Durch Anblasen mit Luft wurde die ringförmige Schmelzefahne abgekühlt, anschließend flachgelegt, im Randbereich beschnitten, so dass zwei Folienbahnen getrennt werden konnten. Diese wurden auf separaten Wickeleinrichtungen aufgerollt.

### Beispiel B

Mit Hilfe eines Zweischicht-Blasfolienwerkzeuges wurde eine Folie hergestellt, deren höherschmelzende Schicht aus einem handelsüblichen TPC der Shore-D-Härte 40 gebildet wurde. Das Hartsegment dieses Copolyesters wurde aus 1,4 Butandiol und Dimethylterephthalat umgeestert, das Weichsegment bestand aus Polytetramethylen-Glykol. Der MFI betrug 17 g/10 min bei 200°C und einer Prüfbelastung von 2,16 kg. Die Dichte lag bei 1,15 g/cm³.

Dieses TPC wurde mit einem Hitzestabilisator in einem Extruder aufgeschmolzen und zu einer 25 µm dicken Schicht ausgeformt. Die niedriger erweichende Schicht wurde aus einem Ethylen-Acrylsäure-Copolymer-Hotmelt-Material gebildet, dessen Acrylsäure-Anteil bei 10 Gew.-% lag und das einen MFI von 1,3 g/10 min bei 190°C und 2,16 kg bei einer Dichte von 0,940 g/cm³ aufwies. Ihre Dicke lag bei 20 µm.

Die beiden Schmelzeströme wurden in einem Zweischicht-Blasfolienkopf übereinandergelegt und aus diesem ausgetragen. Durch Anblasen mit Luft wurde die ringförmige Schmelzefahne abgekühlt, anschließend flachgelegt, im Randbereich beschnitten, so dass zwei Folienbahnen getrennt werden konnten. Diese wurden auf separaten Wickeleinrichtungen aufgerollt.

### Beispiel C

Mit Hilfe eines Zweischicht-Blasfolienwerkzeuges wurde eine Folie hergestellt, deren höherschmelzende Schicht aus einem handelsüblichen TPC der Shore-D-Härte 40 gebildet wurde. Das Hartsegment dieses Copolyesters wurde aus 1,4 Butandiol und Dimethylterephthalat umgeestert, das Weichsegment bestand aus Polytetramethylen-Glykol. Der MFI betrug 17 g/10 min bei 200°C und einer Prüfbelastung von 2,16 kg. Die Dichte lag bei 1,15 g/cm³.

Dieser 25 µm dicken Schicht wurden die üblichen Prozessadditive zugesetzt. Sämtliche für diese Schicht eingesetzten Komponenten wurden gemeinsam in einem Extruder aufgeschmolzen.

Die niedriger erweichende Schicht wurde aus einem Ethylen-Acrylsäure-Ester-Copolymer-Hotmelt-Material gebildet, dessen Anteil mit Methanol veresterter Acrylsäure bei 25 Gew.-% lag und das einen MFI von 0,4 g/10 min bei 190°C und 2,16 kg bei einer Dichte von 0,944 g/cm³ aufwies. Die für die Ausbildung dieser 20 µm dicken, niedriger erweichenden Schicht eingesetzten Komponenten wurden mit einem weiteren Extruder plastifiziert.

Die beiden Schmelzeströme wurden in einem Zweischicht-Blasfolienkopf übereinandergelegt und aus diesem ausgetragen. Durch Anblasen mit Luft wurde die ringförmige Schmelzefahne abgekühlt, anschließend flachgelegt, im Randbereich beschnitten, so dass zwei Folienbahnen getrennt werden konnten. Diese wurden auf separaten Wickeleinrichtungen aufgerollt.

### Vergleichsbeispiel 1

Mit Hilfe eines Zweischicht-Blasfolienwerkzeuges wurde eine Folie hergestellt, deren höherschmelzende Schicht aus einem handelsüblichen Copolyester-TPE der Shore-D-Härte 35 gebildet wurde. Das Hartsegment dieses Copolyesters bestand aus Butylenterephthalat, das Weichsegment wurde aus Polyether-Glykol gebildet. Der MFI lag bei 12 g/10 min bei 190°C und einer Prüfbelastung von 2,16 kg. Die Dichte lag bei 1,15 g/cm³.

Diese 20 µm dicke Schicht wurde ohne weitere Additive in einem Extruder aufgeschmolzen. Die niedriger erweichende Schicht wurde aus einem Ethylen-Acrylsäure-Copolymer-Hotmelt-Material gebildet, dessen Acrylsäure-Anteil bei 9,5 Gew.-% lag und das einen MFI von 1,5 g/10 min bei 190°C und 2,16 kg bei einer Dichte von 0,938 g/cm³ aufwies. Die für die Ausbildung dieser 20 µm dicken, niedriger erweichenden Schicht eingesetzten Komponenten wurden mit einem weiteren Extruder plastifiziert. Die beiden Schmelzeströme wurden in einem Zweischicht-Blasfolienkopf übereinandergelegt und aus diesem ausgetragen. Durch Anblasen mit Luft wurde die ringförmige Schmelzefahne abgekühlt, anschließend flachgelegt, im Randbereich beschnitten, so dass zwei Folienbahnen getrennt werden konnten. Diese wurden auf separaten Wickeleinrichtungen aufgerollt.

### Vergleichsbeispiel 2

Mit Hilfe eines Zweischicht-Blasfolienwerkzeuges wurde eine Folie hergestellt, deren höherschmelzende Schicht aus einem handelsüblichen TPC der Shore-D-Härte 55 gebildet wurde. Das Hartsegment dieses Copolyesters wurde aus 1,4 Butandiol und Dimethylterephthalat umgeestert, das Weichsegment bestand aus Polytetramethylen-Glykol. Der MFI betrug 15 g/10 min bei 230°C und einer Prüfbelastung von 2,16 kg. Die Dichte lag bei 1,20 g/cm³. Diese 21 µm dicke Schicht wurde in einem Extruder aufgeschmolzen. Die niedriger erweichende Schicht wurde aus einem Ethylen-Acrylsäure-Copolymer-Hotmelt-Material gebildet, dessen Methacrylsäure-Anteil bei 9 Gew.-% lag und das einen MFI von 2,5 g/10 min bei 190°C und 2,16 kg bei einer Dichte von 0,94 g/cm³ aufwies. Die für die Ausbildung dieser 55 µm dicken, niedriger erweichenden Schicht eingesetzten Komponenten wurden mit einem weiteren Extruder plastifiziert.

Die beiden Schmelzeströme wurden in einem Zweischicht-Blasfolienkopf übereinandergelegt und aus diesem ausgetragen. Durch Anblasen mit Luft wurde die ringförmige Schmelzefahne abgekühlt, anschließend flachgelegt, im Randbereich beschnitten, so dass zwei Folienbahnen getrennt werden konnten. Diese wurden auf separaten Wickeleinrichtungen aufgerollt.

### Vergleichsbeispiel 3

Mit Hilfe eines Zweischicht-Blasfolienwerkzeuges wurde eine Folie hergestellt, deren höherschmelzende Schicht aus einem handelsüblichen Copolyester-TPE der Shore-D-Härte 35 gebildet wurde. Das Hartsegment dieses Copolyesters bestand aus Butylenterephthalat, das Weichsegment wurde aus Polyether-Glycol gebildet. Der MFI lag bei 12 g/10 min bei 190°C und einer Prüfbelastung von 2,16 kg. Die Dichte lag bei 1,15 g/cm³.

Diese 21 µm dicke Schicht wurde ohne weitere Additive in einem Extruder aufgeschmolzen. Die niedriger erweichende Schicht wurde aus einem Ethylen-Acrylsäure-Copolymer-Hotmelt-Material gebildet, dessen Acrylsäure-Anteil bei 10 Gew.-% lag und das einen MFI von 1,3 g/10 min bei 190°C und 2,16 kg bei einer Dichte von 0,940 g/cm³ aufwies. Ihre Dicke lag bei 21 µm

Prüfungen an den im Rahmen der Beispiele und Vergleichsbeispiele hergestellten Mustern:

### Zugversuch

Der Zugversuch an den im Rahmen der Beispiele und Vergleichsbeispiele hergestellten Folien wurde nach ISO 527 durchgeführt. Die Prüfkörper wurden jeweils längs und quer zur Laufrichtung aus der Folie geschnitten.

### Erweichungsbereich

Den angegebenen Werten für den Erweichungsbereich auf der Kofler-Heizbank liegt die im folgenden beschriebene Testmethode zugrunde. Auf eine Kofler-Heizbank werden (Folien-) Stücke des zu untersuchenden Kunststoffs mit einer Grundfläche von mindestens 1 mm² gelegt. Nachdem diese Stücke mindestens 60 sec auf der Kofler-Heizbank gelegen haben, wird mit einem Skalpell festgestellt, bei welcher Position der Heizbank sich die Kunststoff-Teststücke ohne Einwirkung einer großen Kraft von der Seite her plastisch verformen lassen. Die Position auf der Kofler-Heizbank wird dann mit der Temperatur korreliert. Die an verschiedenen Teststücken ermittelten Maximal- und Minimal-Werte geben das obere und untere Ende des Erweichungsbereiches an.

### Verbundhaftung

Unter Verbundhaftung wird der Maximalwert der Kraft verstanden, der notwendig ist, um die zu prüfende Folie von einem Prüfstreifen in 15 mm Breite auf eine Länge von 10 mm unter einem Trennwinkel von 90° spaltend zu trennen. Die Verbundhaftung wird in N/Probenbreite angegeben. Der Abzugswinkel beträgt 90°, die Abzugsgeschwindigkeit 100 mm/min.

Die in der nachfolgenden Tabelle wiedergegebenen, die Folien hinsichtlich der erfindungsgemäßen Eigenschaften charakterisierenden Daten zeigen deutlich, dass die in den Beispielen beschriebenen erfindungsgemäßen Materialverbund deutlich besser als die im Rahmen der Vergleichsbeispiele hergestellten Verbunde sind.

### Tabelle 1

Eigenschaften der im Rahmen der Beispiele und Vergleichsbeispiele hergestellten Folien

| Eigenschaft | Bestimmungs-methode | Einheit | Beispiel A | Beispiel B | Beispiel C | Vergleichs-beispiel 1*) | Vergleichs- beispiel 2 | Vergleichs-beispiel 3 |
|---|---|---|---|---|---|---|---|---|
| | | | | | | | | |
| Modul 100% längs/quer | ISO 527 | MPa | 10/8 | 17/9 | 7/5 | 15/8 | 15/12 | 16/8 |
| Modul 50% längs/quer | ISO 527 | MPa | 9/7 | 14/8 | 7/5 | 12/7 | 13/11 | 13/6 |
| Verbundhaftung | DIN 53357 | N/15m m | 2,7 | 2,0 | > 3,0 | 0,1 | 0,2 | 0,1 |
| Erweichungsbereich der niedriger schmelzenden Seite | (auf Kofler-bank) | °C | 88 - 92 | 103-105 | 85-87 | 104-105 | 105-108 | 107-111 |
| Erweichungsbereich der höher schmelzenden Seite | (auf Kofler-bank) | °C | 185-189 | 159-163 | 155-159 | 139-142 | 182-186 | 138-142 |
| Reiß-dehnung längs/quer | ISO 527 | % | 650/710 | 380/510 | 600/700 | 390/530 | 520/580 | 350/500 |
| Reiß-Festigkeit längs/quer | ISO 527 | MPa | 39/34 | 33/28 | 27/25 | 29/26 | 3736 | 28/24 |
| | | | | | | | | |

Die aus dem Verbundhaftungsversuch erhaltenen Werte belegen, dass die erfindungsgemäßen Folien den im Rahmen der Vergleichsbeispiele hergestellten Proben überlegen sind. Die im Zugversuch erhaltenen Werte zur Spannung bei niedrigen Dehnungen zeigen zudem für die erfindungsgemäße Verwendung als Schutzfolien für Dämmstoffmaterialien vorteilhaft flexible Eigenschaften der erfindungsgemäßen Materialverbunde. Bei den durch Blasfoliencoextrusion hergestellten Verbunden verbleiben nur geringe Spannungen und somit wenig Relaxationen bei Wiederaktivierung.

## Patentansprüche

1. Thermoplastischer Materialverbund aus mindestens zwei Schichten, **dadurch gekennzeichnet, dass** eine erste Schicht im Wesentlichen aus thermoplastischen Polyesterblockcopolymeren besteht und eine Erweichungstemperatur oberhalb 150°C aufweist und eine zweite Schicht im Wesentlichen aus Material aus der Gruppe bestehend aus Polyolefin-Methacrylsäure-Copolymere, Polyolefin-Acrylsäureester-Copolymere, Polyolefin-Methacrylsäureester-Copolymere und Mischungen daraus besteht und eine Erweichungstemperatur unterhalb 135°C aufweist.

2. Materialverbund gemäß Anspruch 1, **dadurch gekennzeichnet, dass** die zweite Schicht aus Copolymeren des Ethylens besteht, deren Anteil an Comonomeren zwischen 5 Gew.-% und 30 Gew.-%, bezogen auf die gesamte Copolymermasse, beträgt.

3. Materialverbund gemäß Anspruch 2, **dadurch gekennzeichnet, dass** als Material für die zweite Schicht Ethylen-Butylacrylate oder Ethylen-Methacrylate eingesetzt werden.

4. Materialverbund gemäß Anspruch 2, **dadurch gekennzeichnet, dass** als Comomere 20 bis 30 Gew.-%, bezogen auf das Copolymer, Acrylsäure, deren Ester oder deren Salze eingesetzt werden.

5. Materialverbund gemäß Anspruch 1, **dadurch gekennzeichnet, dass** der Schmelzflussindex des Materials der zweiten Schicht zwischen 0,5 g/10 min und 10 g/10 min (gemessen nach DIN 53 735 bei 190°C und einer Prüfmasse von 2,16 kg) liegt.

6. Materialverbund gemäß Anspruch 1, **dadurch gekennzeichnet, dass** für das Material der ersten Schicht Polyether-Blocksegmente basierend auf Polytetramethylenglykol eingesetzt werden.

7. Materialverbund gemäß Anspruch 1, **dadurch gekennzeichnet, dass** die Erweichungstemperatur des Materials der ersten Schicht zwischen 160°C und 215°C, bevorzugt zwischen 160 und 190°C, beträgt.

8. Materialverbund gemäß Anspruch 1, **dadurch gekennzeichnet, dass** die Polyesterblockcopolymere auf Butandiol und Terephthalsäure basieren.

9. Materialverbund gemäß Anspruch 1, **dadurch gekennzeichnet, dass** der Schmelzflussindex des Materials der ersten Schicht zwischen 0,5 g/10 min (gemessen nach DIN 53 735 bei 230°C und einer Prüfmasse von 2,16 kg) und 30 g/10 min (gemessen nach DIN 53 735 bei 200°C und einer Prüfmasse von 2,16 kg) liegt.

10. Materialverbund gemäß Anspruch 1, **dadurch gekennzeichnet, dass** die Erweichungstemperatur des Materials der zweiten Schicht zwischen 80°C und 110°C liegt.

11. Materialverbund gemäß Anspruch 1, **dadurch gekennzeichnet, dass** die erste und die zweite Schicht jeweils aus einer oder mehreren Einzelschichten bestehen.

12. Materialverbund gemäß Anspruch 1, **dadurch gekennzeichnet, dass** der Verbund auf der Seite der ersten Schicht, die der zweiten Schicht gegenüberliegt, zusätzlich eine nicht haftfeste verbundene Trägerschicht aus Polyethylen aufweist.

13. Materialverbund gemäß Anspruch 1, **dadurch gekennzeichnet, dass** der Verbund eine Dicke von 20 µm bis 200 µm, die erste Schicht eine Dicke von 10 µm bis 150 µm und die zweite Schicht eine Dicke von 10 µm bis 150 µm aufweist.

14. Verwendung eines Materialverbundes gemäß den Ansprüchen 1 bis 13 zur Kaschierung oder Abdichtung von porösen Substraten, insbesondere Schaumkunststoffen, textilen Materialien, Nähten, Vliesstoffen, Leder und Spaltleder, wobei die niedriger erweichende zweite Schicht auf das Substrat direkt aufgebracht und mit diesem verklebt wird.
